# EUROPEAN PATENT APPLICATION

(11) **EP 4 675 817 A1**
(43) Date of publication of application: **07.01.2026**
(21) Application number: 24903980.1
(22) Date of filing: 05.11.2024
(51) Int. Cl.: H01M 50/367, H01M 50/317, H01M 50/291, H01M 50/271, H01M 50/249

(54) **BATTERY PACK**

(30) Priority: 13.12.2023 KR 20230181135
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR)
(74) Representative: Plasseraud IP
(86) International application number: PCT/KR2024/017300
(87) International publication number: WO 2025/127413

(57) **Abstract**

Disclosed is a battery pack. A battery pack according to an embodiment of the present disclosure may include a case having an open upper surface and providing an internal space; a plurality of battery cells accommodated inside the case; and a pack cover that covers the upper surface of the case and has a flat plate portion and a protrusion protruding upward from the flat plate portion.

## Description

### TECHNICAL FIELD

The present disclosure relates to a battery pack.

This application is based on and claims priority from Korean Patent Application No. 10-2023-0181135, filed on December 13, 2023, with the Korean Intellectual Property Office, the disclosure of which is incorporated herein in its entirety by reference.

### BACKGROUND ART

As the demand for portable electronic products such as laptops, video cameras, and mobile phones has rapidly increased and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydrogen batteries, nickel zinc batteries, lithium secondary batteries, and the like, and among them, lithium secondary batteries are in the spotlight as they have advantages of free charge/discharge due to almost no memory effect compared to nickel-based secondary batteries, very low self-discharge rate, and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, secondary batteries have been widely used for driving or energy storage not only in small devices such as portable electronic devices, but also in medium and large devices such as electric vehicles and energy storage systems (ESS). These secondary batteries are accommodated together inside a module case in a state where a plurality of them are electrically connected, which may form one battery module. And, such a battery module may be connected in plurality to form one battery pack.

However, when a plurality of secondary batteries (battery cells) or a plurality of battery modules are concentrated in a narrow space as described above, they may be vulnerable to thermal events. In particular, when an event such as thermal runaway occurs in any one of the battery cells, high temperature gas, flame, heat, or the like may be generated. If such gas, flame, heat, or the like is transferred to other battery cells included in the same battery module, an explosive chain reaction situation such as thermal propagation may occur. And, this chain reaction may cause not only an accident such as fire or explosion in the corresponding battery module, but also fire or explosion in other battery modules.

Moreover, in the case of medium and large-sized battery packs such as electric vehicles, a large number of battery cells and battery modules may be included to increase output and/or capacity, thereby further increasing the risk of thermal chain reaction. In addition, in the case of a battery pack mounted on an electric vehicle, there may be a user such as a driver in the vicinity thereof. Therefore, if a thermal event occurring in a specific battery module is not properly controlled and a chain reaction occurs, it may cause not only significant property damage but also loss of life. Therefore, it is necessary to improve the thermal safety of the battery pack by appropriately controlling thermal events occurring in battery cells or modules.

### DISCLOSURE

### Technical Problem

The present disclosure is designed to solve the above-described problems and other problems.

Another object of the present disclosure may be to provide a battery pack having improved electrical safety when a thermal event occurs.

Still another object of the present disclosure may be to provide a battery pack capable of suppressing thermal propagation due to diffusion of venting gas.

Still another object of the present disclosure may be to provide a battery pack capable of quickly discharging venting gas to the outside of a case when a thermal event occurs.

Still another object of the present disclosure may be to provide a battery pack capable of easily controlling venting when a thermal event occurs.

### Technical Solution

A battery pack according to an embodiment of the present disclosure for achieving the above-described object may include a case having an open upper surface and providing an internal space; a plurality of battery cells accommodated inside the case; and a pack cover that covers the upper surface of the case and has a flat plate portion and a protrusion protruding upward from the flat plate portion.

Additionally, the flat plate portion may surround the protrusion.

Additionally, the protrusion may form a space therein.

Additionally, the case may further include a base plate; and a perimeter wall provided along a perimeter of the base plate, wherein the flat plate portion may be coupled to the perimeter wall.

Additionally, the protrusion may be provided in plurality, and each of the plurality of protrusions may be surrounded by the flat plate portion.

Additionally, the perimeter wall may have a front wall.

Additionally, the battery pack may further include a venting device installed on the front wall, and the protrusion may extend along the front-back direction.

Additionally, the protrusion may be provided in plurality, and the flat plate portion may have a partition portion positioned between two neighboring protrusions, wherein the partition portion may extend toward the front wall.

Additionally, the battery pack may further include a partition wall that divides the internal space and extends in the front-back direction, wherein the partition portion may face the partition wall.

Additionally, the partition portion may be coupled to the partition wall.

Additionally, the battery pack may further include a module case positioned inside the case and accommodating the plurality of battery packs, wherein the protrusion may face an upper surface of the module case.

Additionally, the module case may have venting holes formed on the upper surface.

A vehicle according to one aspect of the present disclosure includes a battery pack of the present disclosure.

### Advantageous Effects

According to at least one of the embodiments of the present disclosure, the thermal safety of the battery pack may be improved.

According to at least one of the embodiments of the present disclosure, thermal propagation due to diffusion of venting gas may be suppressed.

According to at least one of the embodiments of the present disclosure, when a thermal event occurs, the venting gas may be quickly discharged to the outside of the case.

According to at least one of the embodiments of the present disclosure, venting of the battery pack may be easily controlled.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view showing a battery pack according to an embodiment of the present disclosure.
FIG. 2 is an exploded view showing a partial configuration of the battery pack of FIG. 1.
FIG. 3 is a view showing a pack cover of the battery pack of FIG. 1.
FIG. 4 is a view showing the pack cover of FIG. 3 viewed from a different direction.
FIG. 5 is a view schematically showing a cross-sectional configuration taken along the cutting line B-B' of FIG. 4.
FIG. 6 is a view showing the battery module of FIG. 2.
FIG. 7 is a view schematically showing a cross-sectional configuration taken along the cutting line A-A' of FIG. 1.
FIG. 8 is an enlarged view of part C of FIG. 7.
FIG. 9 is an enlarged view of part C of FIG. 7 when a thermal event occurs.
FIG. 10 is a view showing the flow of venting gas when a thermal event occurs.
FIG. 11 is a view showing a modified embodiment of FIG. 8.
FIG. 12 is a view showing another modified embodiment of FIG. 8.
FIG. 13 is a view showing a battery pack according to another embodiment of the present disclosure.
FIG. 14 is a view showing the pack cover of FIG. 13.
FIG. 15 is a view showing the pack cover of FIG. 14 viewed from a different direction.
FIG. 16 is a view schematically showing a cross-sectional configuration taken along the cutting line E-E' of FIG. 14.
FIG. 17 is a view schematically showing a cross-sectional configuration taken along the cutting line D-D' of FIG. 13.
FIG. 18 is a view schematically showing a cross-sectional configuration taken along the cutting line D-D' of FIG. 13 when a thermal event occurs.
FIG. 19 is a view showing the flow of venting gas when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

The +X-axis direction may be referred to as front, and the -X-axis direction may be referred to as back. The +Y-axis direction may be referred to as upper, and the -Y-axis direction may be referred to as lower. The +Y-axis direction may be referred to as right, and the -Y-axis direction may be referred to as left.

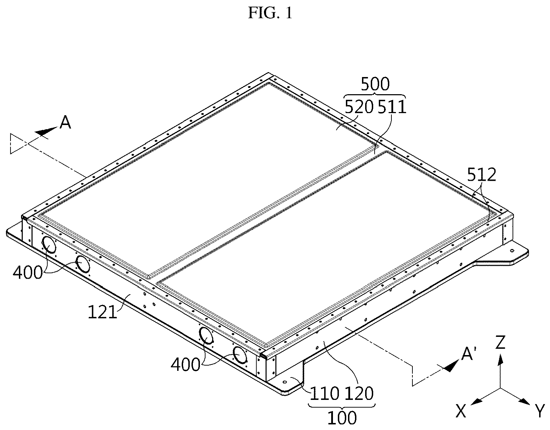

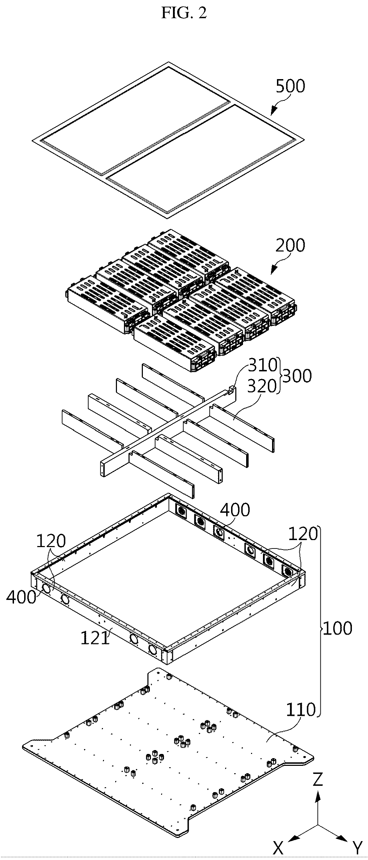

FIG. 1 is a view showing a battery pack according to an embodiment of the present disclosure. FIG. 2 is an exploded view showing a partial configuration of the battery pack of FIG. 1. Referring to FIGS. 1 and 2, a battery pack according to an embodiment of the present disclosure may include a case 100, a plurality of battery cells 220, and a pack cover 500.

The case 100 may provide a space therein. The case 100 may have an open upper surface. The case 100 may have a cuboidal shape. The case 100 may form an exterior of the battery pack.

The battery cell 220 may be provided in plurality. At this time, the battery cell 220 may mean a secondary battery. The battery cell 220 may have a pouch shape. And, the battery cell 220 may extend along the Y-axis direction. The plurality of battery cells 220 may be stacked along the X-axis direction. The plurality of battery cells 220 may be accommodated inside the case 100.

The pack cover 500 may have a plate shape. The pack cover 500 may have a square shape. The pack cover 500 may cover the internal space of the case 100. Additionally, the pack cover 500 may cover an upper surface of the case 100. The pack cover 500 may have a flat plate portion 510 and a protrusion 520. The flat plate portion 510 may have a flat plate shape. The protrusion 520 may protrude upward from the flat plate portion 510. The flat plate portion 510 and the protrusion 520 may be integrally formed.

According to this configuration of the present disclosure, the thermal safety of the battery pack may be improved. When a thermal event occurs, the venting gas may be discharged toward the +Z-axis direction. At this time, the protrusion 520 may accommodate the venting gas and guide the flow of the venting gas. As a result, the venting gas may be prevented from being dispersed, and the propagation of the thermal event may be suppressed. Additionally, the pack cover 500 may be easily deformed due to the protrusion 520. The protrusion 520 may be expanded and deformed upward or outward due to the venting gas. This may facilitate the accommodation or capture of the venting gas.

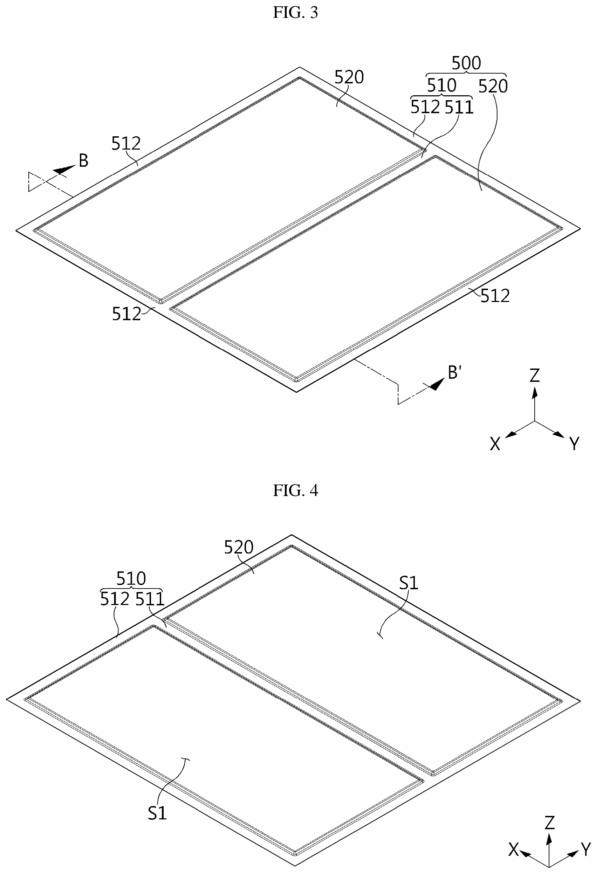

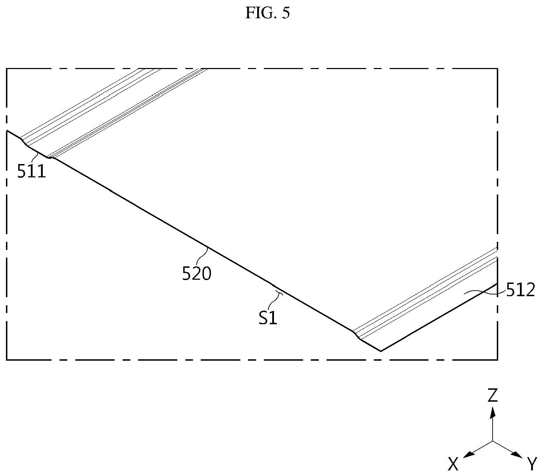

FIG. 3 is a view showing a pack cover 500 of the battery pack of FIG. 1. FIG. 4 is a view showing the pack cover 500 of FIG. 3 viewed from a different direction. FIG. 5 is a view schematically showing a cross-sectional configuration taken along the cutting line B-B' of FIG. 4.

Referring to FIGS. 3 to 5, the flat plate portion 510 may surround the protrusion 520. The flat plate portion 510 may be provided along the perimeter of the pack cover 500. The protrusion 520 may be positioned on the inside of the flat plate portion 510. The flat plate portion 510 may be coupled to the case 100. The protrusion 520 may be provided in a region where the battery cell 220 is positioned.

According to this configuration of the present disclosure, the assemblability of the battery pack may be improved. Since the flat plate portion 510 of the pack cover 500 and the case 100 are coupled to each other, the coupling of the pack cover 500 and the case 100 may be facilitated.

Referring to FIGS. 3 to 5, the protrusion 520 may form a space S1 therein. The protrusion 520 may be formed by bending a portion of the flat plate. The protrusion 520 and the flat plate portion 510 may have substantially the same thickness. And, the protrusion 520 may form a space S1 therein.

According to this configuration of the present disclosure, the thermal safety of the battery pack may be improved. When a thermal event occurs, the venting gas may be discharged toward the +Z-axis direction. At this time, the venting gas may be accommodated or captured in the space S1 formed by the protrusion 520. As a result, the venting gas may be prevented from being dispersed, and the propagation of the thermal event may be suppressed.

Referring to FIGS. 3 to 5, the protrusion 520 may be provided in plurality. The plurality of protrusions 520 may be surrounded by the flat plate portion 510. Additionally, the plurality of protrusions 520 may be divided by the flat plate portion 510. The plurality of protrusions 520 may each be positioned to correspond to a portion of the plurality of battery cells 220.

According to this configuration of the present disclosure, the thermal safety of the battery pack may be improved. Since the plurality of protrusions 520 are provided, the accommodation or capture of the venting gas may be managed in smaller units. As a result, the propagation of the thermal event may be further suppressed.

Referring to FIGS. 1 to 5, the case 100 may include a base plate 110 and a perimeter wall 120. The base plate 110 may have a flat plate shape. The base plate 110 may have a square shape.

The perimeter wall 120 may be provided along the perimeter of the base plate 110. The perimeter wall 120 may be coupled, fastened, fixed, or attached to the upper surface of the base plate 110. Additionally, the perimeter wall 120 may be composed of a plurality of parts. The perimeter wall 120 may include a front wall 121, a rear wall, and a side wall.

The flat plate portion 510 may be fastened, coupled, attached, or fixed to the perimeter wall 120. Additionally, the flat plate portion 510 may be fastened to the upper side or upper surface of the perimeter wall 120.

According to this configuration of the present disclosure, the assemblability of the battery pack may be improved. Since the flat plate portion 510 of the pack cover 500 and the case 100 are coupled to each other, the coupling of the pack cover 500 and the case 100 may be facilitated.

Referring to FIGS. 1 to 5, a battery pack according to an embodiment of the present disclosure may include a venting device 400. The venting device 400 may allow the inside and the outside of the case 100 to communicate with each other or to be blocked. The venting device 400 may discharge venting gas to the outside when the pressure inside the case 100 increases. For example, the venting device 400 may be a gas valve.

The venting device 400 may be provided in plurality. The plurality of venting devices 400 may be installed on the front wall 121. The plurality of venting devices 400 may be arranged along the left-right direction or the Y-axis direction.

The protrusion 520 may extend along the front-back direction or the X-axis direction. Alternatively, the protrusion 520 may extend toward the front wall 121.

According to this configuration of the present disclosure, the protrusion 520 may guide the venting gas toward the venting device 400. As a result, the venting gas may be quickly discharged to the outside of the case 100. As a result, the propagation of the thermal event may be further suppressed.

Referring to FIGS. 1 to 5, the flat plate portion 510 may include a partition portion 511 and a coupling portion 512. The partition portion 511 may be positioned between neighboring protrusions 520. Alternatively, the partition portion 511 may divide the neighboring protrusions 520. The coupling portion 512 may be positioned along the perimeter of the pack cover 500. The coupling portion 512 may be coupled to the perimeter wall 120.

The partition portion 511 may extend along the front-back direction or the X-axis direction. Alternatively, the partition portion 511 may extend toward the front wall 121.

According to this configuration of the present disclosure, since a plurality of protrusions 520 are provided, the accommodation or capture of the venting gas may be managed in smaller units. Additionally, the discharge of the venting gas may be managed in smaller units. As a result, the venting gas may be discharged quickly, and the propagation of the thermal event may be further suppressed.

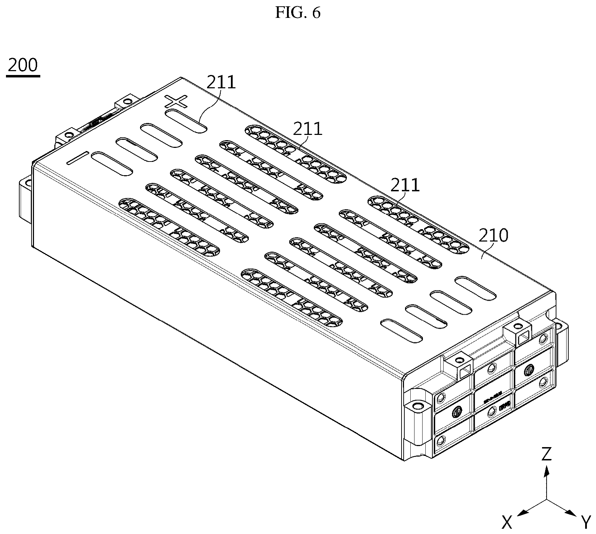

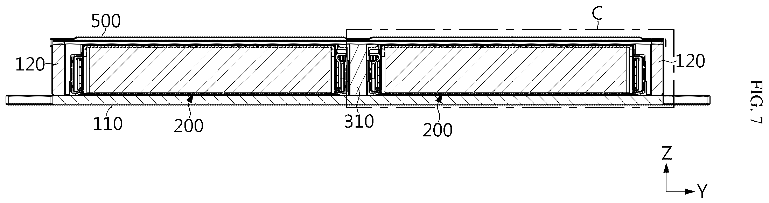

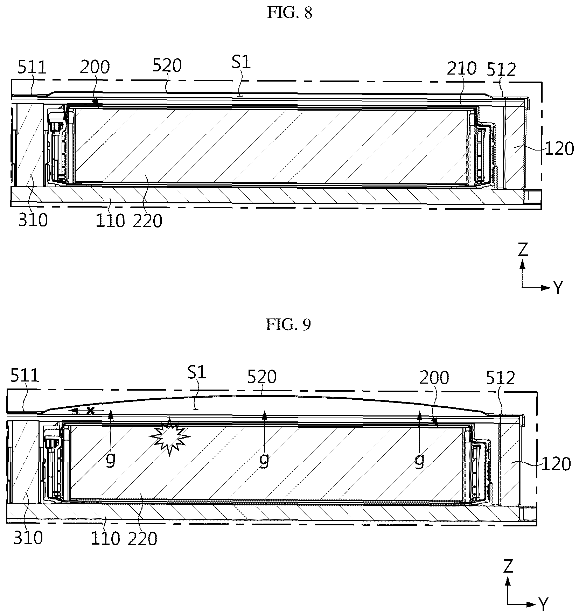

FIG. 6 is a view showing the battery module 200 of FIG. 2. FIG. 7 is a view schematically showing a cross-sectional configuration taken along the cutting line A-A' of FIG. 1. FIG. 8 is an enlarged view of part C of FIG. 7. FIG. 9 is an enlarged view of part C of FIG. 7 when a thermal event occurs.

Referring to FIGS. 6 to 9, the battery pack may include a plurality of battery modules 200. The battery module 200 may include a plurality of battery cells 220 and a module case 210, 100. The module case 210, 100 may form an exterior of the battery module 200. The module case 210, 100 may have a cuboidal shape. The module case 210, 100 may extend in the left-right direction or the Y-axis direction. The battery module 200 may be accommodated in the internal space of the case 100. A plurality of battery cells 220 may be accommodated in the module case 210, 100.

And, the protrusion 520 may face the upper surface of the module case 210, 100. Alternatively, the protrusion 520 may cover the upper surface of the module case 210, 100.

According to this configuration of the present disclosure, the thermal safety of the battery pack may be improved. When a thermal event occurs, the venting gas may be discharged from the module case 210, 100 toward the +Z-axis direction. At this time, the protrusion 520 may accommodate the venting gas and guide the flow of the venting gas. As a result, the venting gas may be prevented from being dispersed, and the propagation of the thermal event to the adjacent battery module 200 may be suppressed.

Referring to FIGS. 6 to 9, the module case 210, 100 may include a venting hole 211. The venting hole 211 may be provided in plurality. The plurality of venting holes 211 may be formed on the upper surface of the case 100. The plurality of venting holes 211 may allow the outside and inside of the module case 210, 100 to communicate with each other.

According to this configuration of the present disclosure, the capture of the venting gas may be facilitated, and the dispersion of the venting gas may be more suppressed. The venting gas may be discharged toward the protrusion 520 through the venting holes 211.

Referring to FIGS. 6 to 9, the battery pack according to an embodiment of the present disclosure may further include a partition wall 300. The partition wall 300 may divide the internal space of the case 100. The partition wall 300 may include a center wall 310 and a cross wall 320. The center wall 310 may extend in the front-back direction or the X-axis direction. The center wall 310 may be positioned at a central part of the internal space of the case 100. And, the partition portion 511 may face the center wall 310. Additionally, the partition portion 511 may extend along the center wall 310. The cross wall 320 may extend in the left-right direction or the Y-axis direction. The cross wall 320 may be provided in plurality. The plurality of cross walls 320 may be arranged along the front-back direction or the X-axis direction.

According to this configuration of the present disclosure, the thermal safety of the battery pack may be improved. Since the partition portion 511 is disposed to face the center wall 310, the alignment of the protrusion 520 and the battery module 200 may be improved. As a result, the accuracy of accommodating or capturing the venting gas may be improved.

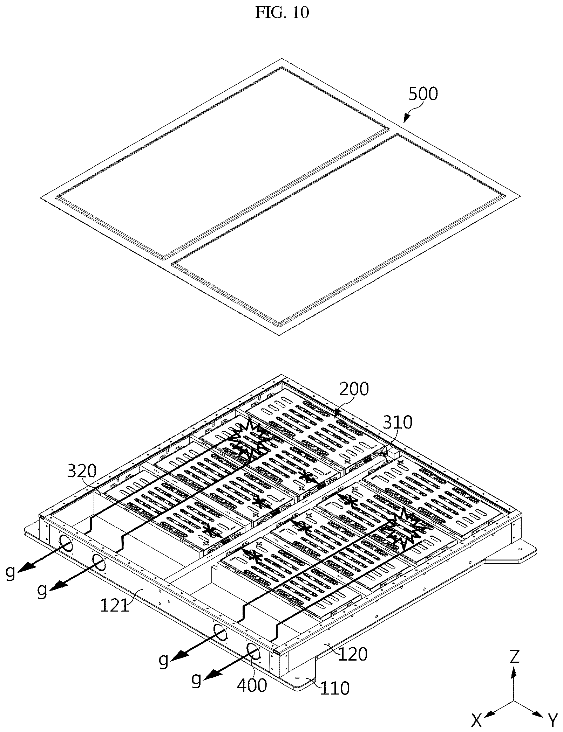

FIG. 10 is a view showing the flow of venting gas when a thermal event occurs. Referring to FIG. 10, when a thermal event occurs in the battery module 200, the venting gas may flow forward or in the +X-axis direction along the protrusion 520. And, the venting gas may be suppressed from moving in the +Y-axis or -Y-axis. As a result, the venting gas may be quickly discharged to the outside of the case 100 through the venting device 400 without propagating the thermal event to the adjacent battery module 200.

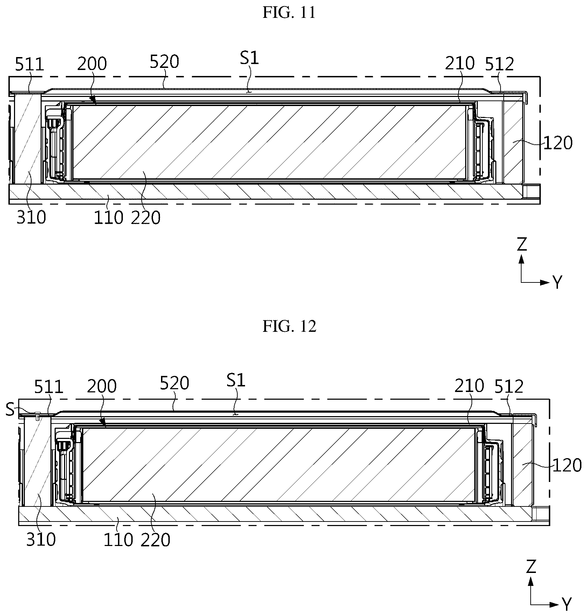

FIG. 11 is a view showing a modified embodiment of FIG. 8. Referring to FIG. 11, the center wall 310 may support the partition portion 511. Alternatively, the center wall 310 may be in contact with the partition portion 511. As a result, even if a thermal event occurs, the formation of a gap between the center wall 310 and the partition portion 511 may be suppressed.

According to this configuration of the present disclosure, the diffusion of the venting gas may be suppressed more strongly.

FIG. 12 is a view showing another modified embodiment of FIG. 8. Referring to FIG. 12, the partition portion 511 may be coupled to the partition wall 300. The partition portion 511 may be fastened, coupled, fixed, or attached to the upper part or upper end of the center wall 310. Alternatively, the partition portion 511 and the center wall 310 may be coupled through welding. Alternatively, the battery pack may further include a fastening member S that fastens the partition portion 511 to the center wall 310.

According to this configuration of the present disclosure, the diffusion of the venting gas may be suppressed more strongly.

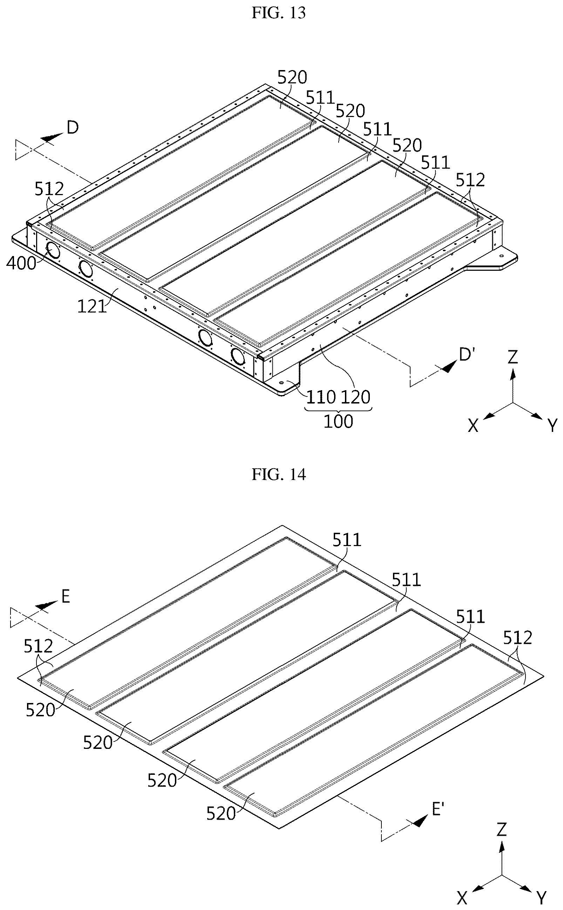

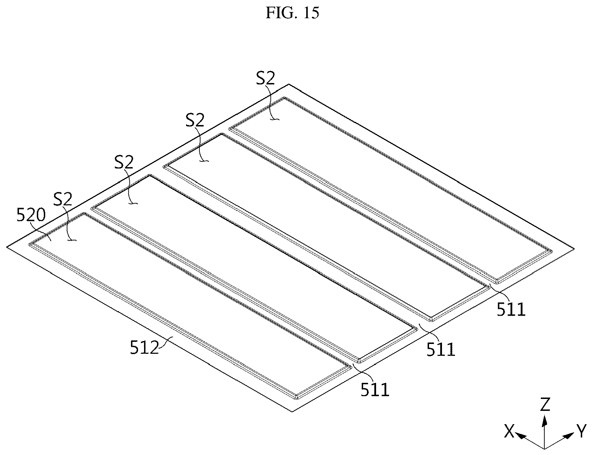

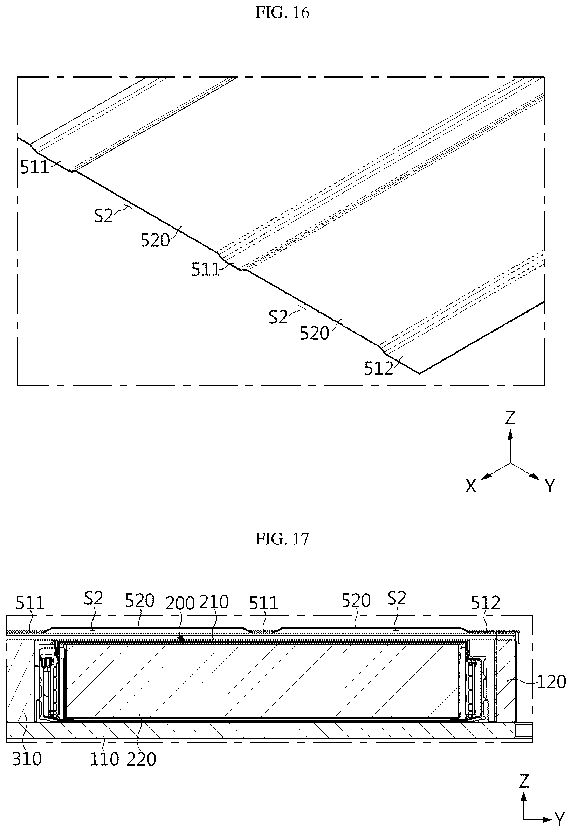

FIG. 13 is a view showing a battery pack according to another embodiment of the present disclosure. FIG. 14 is a view showing the pack cover 500 of FIG. 13. FIG. 15 is a view showing the pack cover 500 of FIG. 14 viewed from a different direction. FIG. 16 is a view schematically showing a cross-sectional configuration taken along the cutting line E-E' of FIG. 14.

Referring to FIGS. 13 to 16, a pack cover 500 of a battery pack according to another embodiment of the present disclosure may include a plurality of partition portions 511. The pack cover 500 may include four protrusions 520 and three partition portions 511 that divide the four protrusions 520. The plurality of partition portions 511 may divide the protrusions 520 into smaller units.

The plurality of partition portions 511 or the plurality of protrusions 520 may extend along the front-back direction or the X-axis direction. And, the plurality of partition portions 511 or the plurality of protrusions 520 may be arranged along the left-right direction or the Y-axis direction.

Since the plurality of protrusions 520 are provided, the space S2 formed by the protrusions 520 may be managed in smaller units. As a result, the accommodation or capture of the venting gas may be managed in smaller units. As a result, the propagation of the thermal event may be further suppressed.

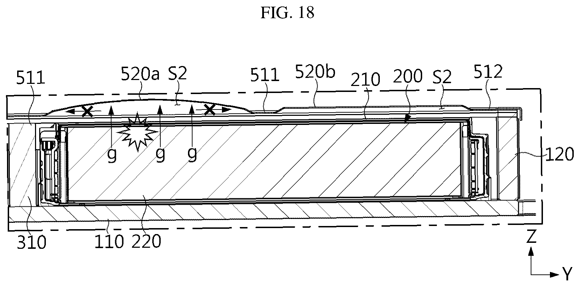

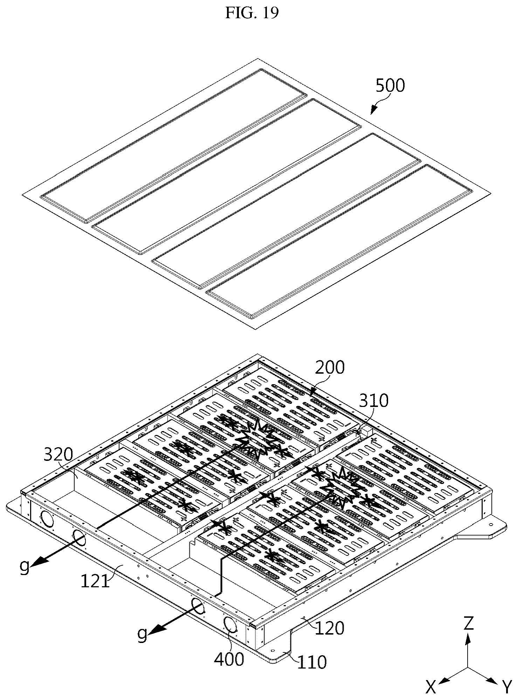

FIG. 17 is a view schematically showing a cross-sectional configuration taken along the cutting line D-D' of FIG. 13. FIG. 18 is a view schematically showing a cross-sectional configuration taken along the cutting line D-D' of FIG. 13 when a thermal event occurs. FIG. 19 is a view showing the flow of venting gas when a thermal event occurs.

Referring to FIGS. 17 to 19, when a thermal event occurs in the battery module 200, the venting gas may flow forward or in the +X-axis direction along the protrusion 520. And, the venting gas may be suppressed from moving in the +Y-axis or -Y-axis. Even if a thermal event occurs in any one battery module 200, the protrusion 520 that accommodates or captures the venting gas may vary depending on which part of the battery module 200 the venting gas is discharged from.

For example, when the venting gas is generated in a central part, the protrusion 520a facing that part may expand to accommodate or capture the venting gas. And, the diffusion of the venting gas into the space S2 formed by other adjacent protrusion 520b may be suppressed. Additionally, the diffusion of the venting gas in the -Y-axis direction beyond the center wall 310 may be suppressed.

As a result, the venting gas may be quickly discharged to the outside of the case 100 through the venting device 400 without propagating the thermal event not only to the adjacent battery module 200 but also to other parts of the battery module 200 where the thermal event occurred.

Additionally, the battery pack according to the present disclosure may further include various components, for example, components of a battery pack known at the time of filing of the present disclosure, such as a BMS, a busbar, a relay, a current sensor, and the like.

A vehicle according to the present disclosure may include a battery pack according to the present disclosure described above. The battery pack according to the present disclosure may be applied to vehicles such as electric vehicles or hybrid vehicles. Additionally, the vehicle according to the present disclosure may further include various other components included in the vehicle, for example, a body, a motor, a control device such as an electronic control unit (ECU), and the like, in addition to this battery pack.

Meanwhile, the terms indicating directions as used herein such as upper, lower, left, right, front, and back are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

## Claims

1. A battery pack comprising:
a case having an open upper surface and providing an internal space;
a plurality of battery cells accommodated inside the case; and
a pack cover that covers the upper surface of the case and has a flat plate portion and a protrusion protruding upward from the flat plate portion.

2. The battery pack according to claim 1,
wherein the flat plate portion surrounds the protrusion.

3. The battery pack according to claim 1,
wherein the protrusion forms a space therein.

4. The battery pack according to claim 1,
wherein the case further comprises:
a base plate; and
a perimeter wall provided along a perimeter of the base plate,
wherein the flat plate portion is coupled to the perimeter wall.

5. The battery pack according to claim 1,
wherein the protrusion is provided in plurality, and
each of the plurality of protrusions is surrounded by the flat plate portion.

6. The battery pack according to claim 1,
wherein the perimeter wall has a front wall,
wherein the battery pack further comprises a venting device installed on the front wall, and
the protrusion extends along the front-back direction.

7. The battery pack according to claim 6,
wherein the protrusion is provided in plurality, and
the flat plate portion has a partition portion positioned between two neighboring protrusions,
wherein the partition portion extends toward the front wall.

8. The battery pack according to claim 7, further comprising:
a partition wall that divides the internal space and extends in the front-back direction,
wherein the partition portion faces the partition wall.

9. The battery pack according to claim 8,
wherein the partition portion is coupled to the partition wall.

10. The battery pack according to claim 1, further comprising:
a module case positioned inside the case and accommodating the plurality of battery packs,
wherein the protrusion faces an upper surface of the module case.

11. The battery pack according to claim 10,
wherein the module case has venting holes formed on the upper surface.

12. A vehicle comprising a battery pack according to any one of claims 1 to 11.
